# EUROPÄISCHE PATENTSCHRIFT

(11) **EP 1 989 021 B1**
(45) Veröffentlichungstag und Bekanntmachung des Hinweises auf die Patenterteilung: **25.11.2009**
(21) Anmeldenummer: 07703529.3
(22) Anmeldetag: 21.02.2007
(51) Int. Cl.: B24B 19/12, B23Q 11/08, B24B 55/04

(54) **VERFAHREN UND VORRICHTUNG ZUR FERTIGBEARBEITUNG VON GEBAUTEN NOCKEN- UND EXZENTERWELLEN**
METHOD AND DEVICE FOR THE FINISH MACHINING OF COMPOSITE CAMSHAFTS AND ECCENTRIC SHAFTS
PROCEDE ET DISPOSITIF D'USINAGE FINAL D'ARBRES A CAMES ET EXCENTRIQUES MONTES

(30) Priorität: 22.02.2006 DE 102006008532
(43) Veröffentlichungstag der Anmeldung: 12.11.2008
(73) Patentinhaber: ThyssenKrupp Presta TecCenter AG, 9492 Eschen (LI)
(72) Erfinder: BINDER, Thomas, A-6800 Feldkirch (AT); TEPPAN, Ignaz Klaus, A-6811 Göfis (AT)
(74) Vertreter: Adams, Steffen
(86) Internationale Anmeldenummer: PCT/EP2007/001479
(87) Internationale Veröffentlichungsnummer: WO 2007/096139

(56) Entgegenhaltungen:
- DE-A1- 4 306 621

## Beschreibung

Die Erfindung betrifft ein Verfahren zur Herstellung einer gebauten, einen Wellenkörper, mindestens ein drehfest mit dem Wellenkörper verbundenes erstes Bauteil und mindestens ein relativ zum Wellenkörper verdrehbares zweites Bauteil umfassenden Welle. Des Weiteren betrifft die Erfindung eine Vorrichtung zum Fertigbearbeiten derartiger Wellen.

Im Bereich der Motorentechnik ist immer wieder die Aufgabe gestellt, z.B. Nockenwellen mit zueinander verdrehbaren Nocken oder Nockenwellen oder sonstige Wellen, wie beispielsweise Verstellwellen für variable Ventiltriebe von Verbrennungsmotoren, mit Exzenterscheiben sowie vormontierten Lagerelementen zu versehen. Sowohl die zueinander verdrehbaren Nocken als auch die Lagerelemente sind dabei relativ zum Wellenkörper der Welle drehbar. Die drehfest mit dem Wellenkörper verbundenen Bauteile, wie z.B. die Nocken und die Exzenterscheiben, aber auch die Lagerelemente, müssen dabei sehr hohe Genauigkeitsanforderungen erfüllen, damit sie ihre Funktion im eingebauten Zustand der Welle ordnungsgemäß erfüllen können. So müssen z.B. im Fall einer Nockenwelle mit zueinander verdrehbaren Nocken deren Laufflächen hinsichtlich ihrer Form und Lage in Bezug auf die Laufflächen der nicht verdrehbaren Nocken und in Bezug auf die Wellenachse sehr form- und maßgenau ausgebildet sein. Im Fall von gebauten Wellen mit Exzenterscheiben und vormontierten Lagern müssen die Lauffläche der Exzenterscheiben und auch des gegenüber dem Wellenkörper drehbaren Lagerelements hinsichtlich ihrer form und Lage sehr genau relativ zu der Wellenachse ausgerichtet sein.

Beispiele für gebaute Nockenwellen mit zueinander verdrehbaren Nocken sind den Druckschriften DE 43 06 621 A1 und EP 1 362 986 A1 zu entnehmen. Ein Beispiel für eine Verstellwelle für einen variablen Ventiltrieb ist der EP 1 593 880 A1 zu entnehmen.

Werden die drehfest mit dem Wellenkörper verbundenen Bauteile mit dem Wellenkörper z.B. durch solche Fügeverfahren verbunden, bei denen zumindest abschnittsweise eine plastische Umformung der Welle erfolgt oder eine Schrumpfverbindung zwischen Bauteil und Wellenkörper hergestellt wird, kann es zu Aufweitungen der drehfest mit der Welle verbundenen Bauteile kommen. Außerdem kann es zu unerwünschten Veränderungen der Kontur der Funktionsflächen der Bauteile kommen. Derartige Aufweitungen oder Veränderungen machen dann ein anschließendes Schleifen der Bauteile erforderlich. Am Beispiel einer Nockenwelle mit zueinander verdrehbaren Nocken wird diesbezüglich in der Druckschrift DE 43 06 621 C2 deutlich gemacht, dass ein derartiges, sich an einen vollständigen Zusammenbau der Welle anschließendes spanendes Bearbeiten durch Schleifen der Nocken äußerst kompliziert ist und geeignete Vorrichtungen dafür nicht zur Verfügung stehen. Um ein spanendes Bearbeiten der Nocken nach dem vollständigen Zusammenbau der Nockenwelle zu vermeiden und ein kostengünstiges und einfaches Verfahren zur Herstellung einer gebauten Nockenwelle mit zueinander verdrehbaren Nocken zur Verfügung zu stellen, wird in der DE 43 06 621 C2 vorgeschlagen, dass die Nocken vor dem Zusammensetzen der einzelnen Längsabschnitte zu einer Außenwelle fertig bearbeitet, gehärtet und geschliffen werden und dass abschließend die einzelnen Längsabschnitte mit den vollständig fertig gestellten Nocken miteinander verbunden werden. Bei dieser Vorgehensweise ist jedoch nicht sichergestellt, dass die Genauigkeitsanforderungen in Bezug auf die Funktionsflächen der bewegbaren Nocken nach dem Zusammenbau der Längsabschnitte zu der Außenwelle tatsächlich erfüllt sind. So können sich durch den Zusammenbau der Längsabschnitte außerhalb des Toleranzbereiches liegende Ungenauigkeiten ergeben. Diese Ungenauigkeiten treten zudem in einer nicht reproduzierbaren Art und Weise auf, sodass eine aufwändige individuelle Nachbearbeitung dieser vom Soll abweichenden zusammengebauten Wellen erforderlich ist. Darüber hinaus ist das maßgenaue Fertigbearbeiten aller Einzelteile vor dem Zusammenbau sehr aufwändig und kostenintensiv, da beispielsweise die mit der Bearbeitung verbundenen Rüst- und Handhabungszeiten in Bezug auf jedes Einzelteil und damit mehrfach anfallen.

Das in der EP 1 362 986 A1 offenbarte Herstellungsverfahren entspricht im Wesentlichen dem in der vorgenannten DE 43 06 621 C2 beschriebenen Herstellungsverfahren, sodass insoweit auch die gleichen Nachteile bestehen.

Der Erfindung liegt die Aufgabe zugrunde, ein Verfahren und eine Vorrichtung der eingangs genannten Art zur Verfügung zu stellen, mit dem bzw. mit der die Welle unter Erfüllung der geforderten Genauigkeitsanforderungen einfacher und kostengünstiger hergestellt werden kann, wobei drehfest mit dem Wellenkörper verbundene Bauteile geschliffen werden können, ohne die Funktion weiterer, verdrehbar auf der Nockenwelle angeordneter Bauteile zu beeinträchtigen.

Diese Aufgabe wird hinsichtlich des Verfahrens gelöst durch ein Verfahren nach dem Patentanspruch 1. Vorteilhafte Weiterbildungen des erfindungsgemäßen Verfahrens sind in den zugehörigen Unteransprüchen angegeben. Hinsichtlich der Vorrichtung wird diese Aufgabe durch eine Vorrichtung gemäß dem Patentanspruch 7 gelöst. Vorteilhafte Weiterbildungen sind in den entsprechenden Unteransprüchen angegeben.

Aufgrund der vorstehend genannten, sehr hohen Genauigkeitsanforderungen wäre es wünschenswert, zumindest die Funktionsflächen der drehfest mit der Welle verbundenen Bauteile erst nach der vollständigen Montage der gebauten Welle fertig zu bearbeiten und dabei die geforderten Genauigkeiten an der fertigen Welle einzustellen. Hier setzt die Erfindung an. Mit der Erfindung wird eine Lösung zur Verfügung gestellt, welche die spanende Fertigbearbeitung zumindest der Funktionsflächen des mindestens einen drehfest mit der Welle verbundenen ersten Bauteils nach dem vollständigen Zusammenbau der Welle gestattet, ohne dass die Gefahr besteht, dass die dabei entstehenden Späne die Funktion des mindestens einen relativ zum Wellenkörper verdrehbaren zweiten Bauteils negativ beeinträchtigen.

Erfindungsgemäß ist vorgesehen, dass zumindest das drehfest mit der Welle verbundene erste Bauteil erst nach dem vollständigen Zusammenbau der Welle einer spanabhebenden Bearbeitung unterzogen und das mindestens eine zweite Bauteil während dieser Bearbeitung gegenüber dem mindestens einen ersten Bauteil zumindest teilweise abgeschirmt wird, um bei der Bearbeitung entstehende Späne fernzuhalten. Diese Abschirmung erfolgt dabei erfindungsgemäß dergestalt, dass bei der Bearbeitung des ersten Bauteils entstehende Späne nicht in den Zwischenraum eindringen können, der zwischen dem relativ zum Wellenkörper verdrehbaren zweiten Bauteil und dem Wellenkörper oder zwischen dem relativ zum Wellenkörper verdrehbaren zweiten Bauteil und einem drehfest mit dem Wellenkörper verbundenen, mit dem zweiten Bauteil zusammenwirkenden dritten Bauteil vorhanden ist. Auf diese Weise wird durch die Abschirmung sichergestellt, dass keine Schäden verursachenden Späne zwischen das drehbewegliche zweite Bauteil und ein drehfest mit dem Wellenkörper verbundenes drittes Bauteil bzw. zwischen das drehbewegliche zweite Bauteil und den Wellenkörper selbst gelangen können.

Es kann erfindungsgemäß bereits ausreichend sein, wenn die Abschirmung durch scheibenförmige Abschirmelemente erfolgt, welche unter Ausbildung eines schmalen Ringspaltes mit der Oberfläche des Wellenkörpers im Bereich des Zwischenraumes, der zwischen dem relativ zum Wellenkörper verdrehbaren zweiten Bauteil und dem Wellenkörper oder einem drehfest mit diesem verbundenen dritten Bauteil vorhanden ist, gegen das zweite Bauteil gepresst werden. Auf diese Weise wird eine effektive Abschirmung des Zwischenraumes erreicht, durch die das Eindringen von Spänen in den Zwischenraum verhindert wird. Die Oberfläche des Wellenkörpers ist dabei vorzugsweise geschliffen, sodass die dem Wellenkörper zugewandte innere Oberfläche der scheibenförmigen Abschirmelemente sehr genau an den Wellenkörper angepasst werden kann. Auf diese Weise kann ein sehr kleiner Ringspalt zwischen dem Wellenkörper und den Abschirmelementen eingestellt werden, der das Hindurchtreten von Spänen wirksam verhindert.

In einer bevorzugten Ausführungsform der Erfindung wird die Abschirmung durch eine Einkapselung des relativ zu dem Wellenkörper verdrehbaren zweiten Bauteils erreicht. Dabei wird dieses zweite Bauteil von einer Kapsel derart umschlossen, dass zwischen dem zweiten Bauteil und der Kapsel ein Hohlraum und zwischen der Kapsel und dem Wellenkörper ein Ringspalt vorhanden ist. Die Einkapselung des zweiten Bauteils verhindert das Eindringen von Spänen in den Zwischenraum zwischen dem zweiten Bauteil und dem Wellenkörper bzw. zwischen dem zweiten Bauteil und dem mit dem Wellenkörper drehfest verbundenen dritten Bauteil.

Um sicherzustellen, dass durch den zwischen der Kapsel und dem Wellenkörper ausgebildeten Ringspalt auf keinen Fall Späne hindurchtreten und damit in den Zwischenraum zwischen dem zweiten Bauteil und dem Wellenkörper bzw. dem mit dem Wellenkörper drehfest verbundenen dritten Bauteil eindringen können, ist erfindungsgemäß in einer bevorzugten Ausführungsform vorgesehen, dass der zwischen der Kapsel und dem zweiten Bauteil ausgebildete Hohlraum während der spanabhebenden Bearbeitung des ersten Bauteils von innen nach außen von einem Fluid durchströmt wird. Dieses Fluid wird vorzugsweise unter Druck in den Hohlraum eingebracht, sodass es den Hohlraum von innen nach außen durchströmt und durch den Ringspalt entweicht und dabei ständig ein Eindringen von Spänen von außen durch den Ringspalt verhindert.

Das für den vorgenannten Zweck eingesetzte Fluid kann dabei gleichzeitig in vorteilhafter Weise zur Kühlung des ersten Bauteils während der spanabhebenden Bearbeitung genutzt werden. Das Fluid kann gasförmig oder flüssig sein. So kann es sich beispielsweise um Luft oder Öl oder eine Kühlflüssigkeit handeln, wie sie bei spanabhebenden Bearbeitungen wie z.B. Schleifen in bekannter Weise eingesetzt wird.

Hinsichtlich der Vorrichtung wird die voranstehend genannte Aufgabe durch eine Vorrichtung mit den Merkmalen des Patentanspruchs 7 gelöst. Erfindungsgemäß ist vorgesehen, dass mindestens zweiteilig ausgebildete Abschirmelemente vorgesehen sind, die aus einer Öffnungsstellung in eine Schließstellung bringbar sind, in welcher sie den zwischen dem zweiten Bauteil und dem Wellenkörper oder zwischen dem zweiten Bauteil und einem drehfest mit dem Wellenkörper verbundenen dritten Bauteil vorhandenen Zwischenraum gegenüber dem ersten Bauteil während der spanabhebenden Bearbeitung derart abschirmen, dass in den Zwischenraum keine bei der spanenden Bearbeitung anfallenden Späne eindringen können.

In einer besonders einfachen Ausführungsform der Erfindung sind die Abschirmelemente durch als Halbringe geformte Abdeckscheiben gebildet, die von Haltearmen gehalten und über diese Haltearme im Bereich des zwischen dem zweiten Bauteil und dem Wellenkörper oder einem drehfest mit dem Wellenkörper verbundenen dritten Bauteil vorhandenen Zwischenraums gegen das zweite Bauteil pressbar sind. Es hat sich gezeigt, dass bereits mit diesen einfachen Maßnahmen eine wirksame Abschirmung des Zwischenraums gegen bei der spanabhebenden Bearbeitung des ersten Bauteils anfallende Späne erzielbar ist.

In einer bevorzugten Ausführungsform der Erfindung umfassen die Abschirmelemente Halbschalen, die von Haltearmen gehalten werden und die in der Schließstellung eine Kapsel bilden, durch die das relativ zum Wellenkörper verdrehbare zweite Bauteil während der spanabhebenden Bearbeitung derart umschließbar ist, dass zwischen dem zweiten Bauteil und der Kapsel ein Hohlraum und zwischen den Halbschalen und dem Wellenkörper ein Ringspalt vorhanden ist.

Die Größe des Ringspaltes richtet sich einerseits nach dem Zerspanungsverfahren und andererseits nach dem zu zerspanenden Werkstoff. Je kleiner der Ringspalt, desto besser ist die Abschirmwirkung. Die Anforderungen an die Maßhaltigkeit der Bauteile wächst mit Verkleinerung des Ringspaltes an. Ringspalte im Bereich von 0,1 mm bis 0,4 mm bei Spaltbreiten von 2 mm bis 5 mm haben sich dabei bewährt. Größere Spaltbreiten und auch kleinere Ringspalte führen zu besseren Abdichtungen, bergen jedoch Bauraumprobleme bzw. die oben genannten Toleranzprobleme in sich.

Um ein Eindringen von Spänen während der spanabhebenden Bearbeitung des ersten Bauteils wirksam zu verhindern, ist in mindestens einem von zwei einander zugeordneten Haltearmen ein Kanal vorgesehen, durch den ein Fluid mit Druck in den Hohlraum einleitbar ist. Auf diese Weise kann der Hohlraum durch das Fluid mit einem Überdruck beaufschlagt werden, der das Eindringen von Spänen in den Hohlraum durch den Ringspalt sicher verhindert.

Das relativ zum Wellenkörper verdrehbare zweite Bauteil ist beispielsweise als Lagerelement ausgebildet, über das die Welle im Einsatzfall drehbar gelagert ist. Das Lagerelement kann dabei als unmittelbar über Wälzkörper auf der -vorzugsweise geschliffenen - Oberfläche des Wellenkörpers gelagerte Lagerschale ausgebildet sein. Alternativ hierzu kann das Lagerelement auch als Außenring eines Wälzlagers ausgebildet sein, sodass das Lagerelement über Wälzkörper auf einem mit dem Wellenkörper drehfest verbundenen dritten Bauteil in Gestalt eines Lagerringes gelagert ist. Wiederum alternativ kann das Lagerelement auch als Lagerhülse ausgebildet sein, die mit der Oberfläche des Wellenkörpers oder mit der Oberfläche eines drehfest mit dem Wellenkörper verbundenen dritten Bauteils ein Gleitlager ausbildet.

Erfindungsgemäß kann das zweite, gegenüber dem Wellenkörper relativ verdrehbare Bauteil auch als gegenüber den drehfest mit dem Wellenkörper verbundenen Nocken verdrehbare Nockenanordnung ausgebildet sein, wie sie z.B. in den Druckschriften EP 1 362 986 A1 und DE 43 06 621 A1 beschrieben sind. Hierbei ist eine hohle Außenwelle als Wellenkörper vorgesehen, mit der bestimmte erste Nocken drehfest verbunden sind. Außerdem sind auf dem hohlen Wellenkörper andere, gegenüber den drehfesten ersten Nocken verdrehbare zweite Nocken vorgesehen, die auf einer gegenüber dem Wellenkörper verdrehbaren Hülse angeordnet sind. Diese Hülse ist über ein stiftförmiges Befestigungselement, welches den hohlen Wellenkörper radial durchdringt, mit einer axial durch den hohlen Wellenkörper geführten Innenwelle drehfest verbunden. Die Innenwelle kann relativ zu dem hohlen Wellenkörper verdreht werden. In dem hohlen Wellenkörper ist ein sich in dessen Umfangsrichtung erstreckendes Langloch angeordnet, welches eine relative Verdrehung der Hülse und damit der zweiten Nocken gegenüber dem hohlen Wellenkörper und damit gegenüber den ersten Nocken erlaubt. Bei derartigen Nockenwellen mit drehfesten ersten und gegenüber diesen verdrehbaren zweiten Nocken ist zwischen den die verdrehbaren zweiten Nocken tragenden Hülsen und dem hohlen Wellenkörper ein Zwischenraum vorhanden, in den keine Späne eindringen dürfen, wenn die drehfesten ersten Nocken nach erfolgtem vollständigem Zusammenbau der Welle einer spanabhebenden Endbearbeitung unterzogen werden. Die erfindungsgemäße Abschirmung ist daher in diesen Fällen ganz analog einsetzbar wie in den Fällen, in denen das relativ zum Wellenkörper verdrehbare Bauteil als Lagerelement für die Lagerung der Welle ausgebildet ist. Im Folgenden wird die Erfindung anhand einer ein Ausführungsbeispiel darstellenden Zeichnung näher erläutert. Im Einzelnen zeigen
- Fig. 1: eine Welle in Form einer Verstellwelle, bei der die relativ zum Wellenkörper verdrehbaren Bauteile als zwischen den Nocken angeordnete Lagerelemente ausgebildet sind;
- Fig. 2: eine vergrößerte Darstellung eines Abschnittes einer Nockenwelle, bei der die relativ zu dem Wellenkörper verdrehbaren Bauteile als verdrehbare Nocken ausgebildet sind;
- Fig. 3: eine Zusammenstellungszeichnung der erfindungsgemäßen Vorrichtung mit den Abschirmelementen in der geöffneten Stellung;
- Fig. 4: eine Zusammenstellungszeichnung der erfindungsgemäßen Vorrichtung mit den Abschirmelementen in ihrer Schließstellung;
- Fig. 5: eine vergrößerte Darstellung der Abschirmelemente in der geöffneten Stellung;
- Fig. 6: eine vergrößerte Darstellung der Abschirmelemente in der geschlossenen Stellung;
- Fig. 7: eine vergrößerte Darstellung eines geschlossenen Abschirmelementes im axialen Halbschnitt;
- Fig. 8: eine vergrößerte Darstellung eines geschlossenen Abschirmelementes im axialen Halbschnitt in Anwendung auf eine andere Ausführungsform der zu schleifenden Welle;
- Fig. 9: eine schematische Darstellung eines geöffneten (Fig. 9a) und geschlossenen (Fig. 9b) Abschirmelementes in Seitenansicht zur Veranschaulichung der Schließbewegung;
- Fig. 10: eine schematische Darstellung einer anderen Ausführungsform für ein geöffnetes (Fig. 10a) und ein geschlossenes (Fig. 10b) Abschirmelement in Seitenansicht zur Veranschaulichung einer alternativen Schließbewegung;
- Fig. 11: eine vergrößerte Darstellung eines Beispiels für die Abdeckung der verdrehbaren Nocken entsprechend Fig. 2;
- Fig. 12: eine vergrößerte Darstellung eines Paars von geschlossenen Abschirmelementen, die nur die Spalte abdecken, nicht aber das gesamte verdrehbare Bauteil;
- Fig. 13: eine vergrößerte Darstellung einer Ausführungsform, bei der das relativ zum Wellenkörper verdrehbare Bauteil mittels Fixierringen axial in Position gehalten wird, wobei das Abschirmelement mit den Fixierringen zusammenwirkt.

Die Erfindung wird hier anhand des konkreten Beispiels einer Verstellwelle für einen variablen Ventiltrieb erläutert. Es wird an dieser Stelle jedoch ausdrücklich darauf hingewiesen, dass unter einer Nockenwelle allgemein eine Welle mit mindestens einem Nocken zu verstehen ist, wobei der Nocken mit einem Nockenfolger in Kontakt steht. Durch eine Verdrehung der Welle wird der Nockenfolger nach dem in der Nockenkontur verankerten Ablauf bzw. "Programm" betätigt. So sind also unter dem Begriff Nockenwelle auch Verstellwellen für mechanische variable Ventiltriebe zu subsumieren. In diesem Fall sind die Nocken als Kurvenscheiben (beispielsweise als Exzenterscheiben) ausgebildet und entsprechend als Verstellscheiben auf der Welle angeordnet.

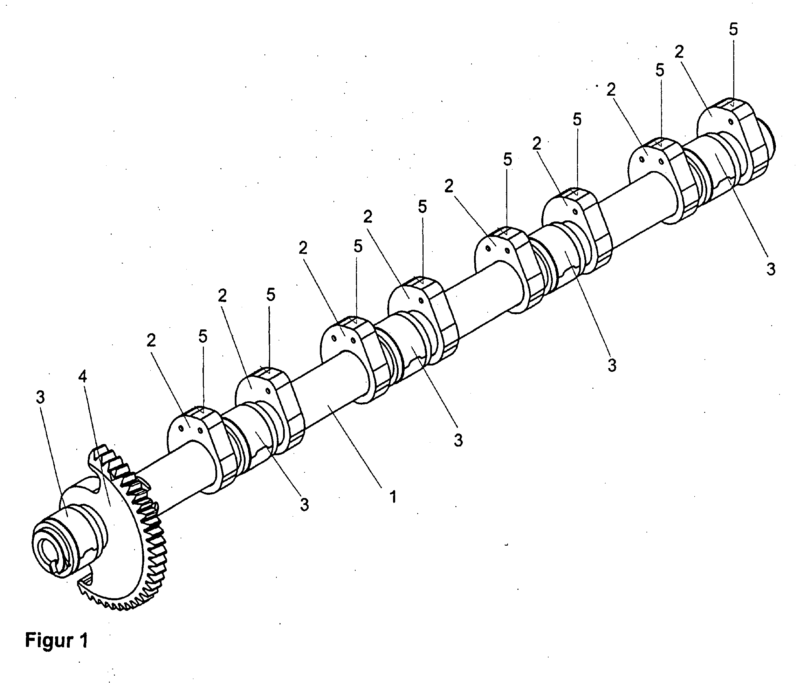

In Fig. 1 ist eine einen Wellenkörper 1 umfassende Verstellwelle dargestellt. Auf dem Wellenkörper 1 sind drehfest Nocken 2 angeordnet. Im dargestellten Ausführungsbeispiel sind die Nocken 2 paarweise angeordnet. Zwischen den Nocken 2 sind jeweils Lagerelemente 3 angeordnet, die relativ zum Wellenkörper 1 drehbar sind. Diese Lagerelemente 3 sind beispielsweise über als Nadeln ausgebildete Wälzkörper direkt auf der Oberfläche des Wellenkörpers 1 gelagert. Am in der Fig. 1 links dargestellten Ende der Verstellwelle ist ein Antriebsrad 4 angeordnet. Neben dem Antriebsrad 4 am äußeren Ende der Welle ist ein weiteres Lagerelement 3 vorgesehen.

Die drehfest mit dem Wellenkörper 1 verbundenen Nocken 2 weisen Funktionsflächen 5 auf, die im Einbauzustand mit nicht dargestellten Nockenfolgerelementen zusammenwirken. In Bezug auf die Funktionsflächen 5 müssen bei der Herstellung der Welle ausgesprochen hohe Genauigkeitsanforderungen erfüllt werden. Einerseits müssen die Funktionsflächen sehr exakt zur Längsachse der Nockenwelle ausgerichtet sein. Andererseits müssen die Funktionsflächen 5 auch sehr genau relativ zu den Oberflächen der Lagerelemente 3 ausgerichtet sein.

Erfindungsgemäß ist vorgesehen, dass die gesamte Welle, wie sie in Fig. 1 dargestellt ist, zunächst vollständig zusammengebaut wird, bevor dann die spanende Endbearbeitung der Welle vorgenommen wird, bei der dann die Genauigkeitsanforderungen erfüllt werden. Insbesondere sollen im Rahmen der spanenden Endbearbeitung der Welle zumindest die vorstehend genannten Funktionsflächen 5 einer spanabhebenden Fertigbearbeitung, z.B. durch Schleifen, unterzogen werden, bei welcher naturgemäß Späne anfallen.

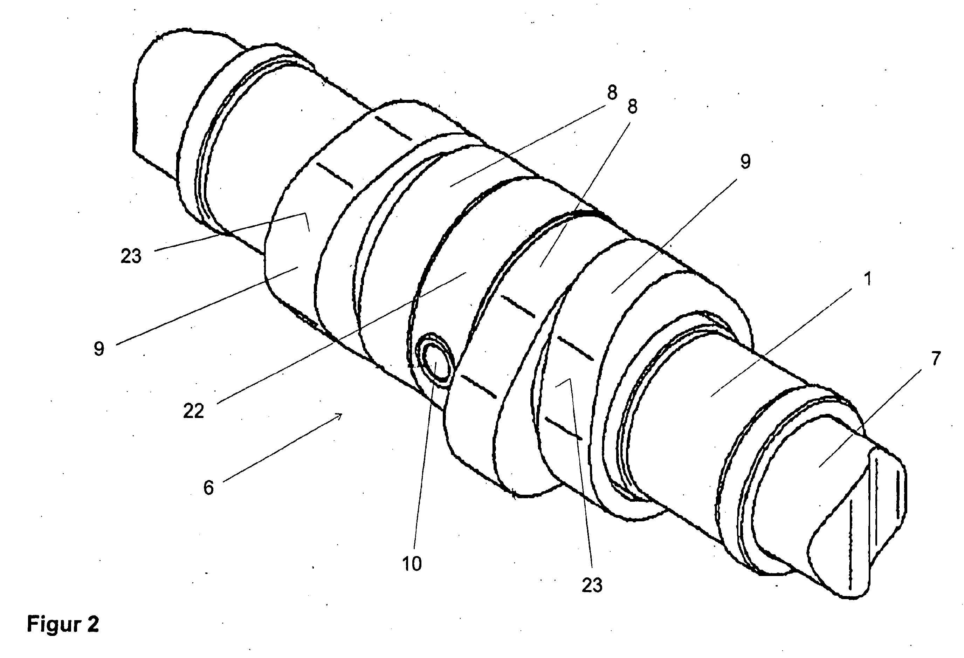

Die relativ zum Wellenkörper 1 verdrehbaren Bauteile, die in den Patentansprüchen als "zweite Bauteile" bezeichnet werden, sind in dem in Fig. 1 dargestellten Ausführungsbeispiel als Lagerelemente 3 dargestellt. Wie in Fig. 2 dargestellt, können diese Elemente auch als verdrehbare Nockenelemente 6 ausgebildet sein.
Der Wellenkörper 1 ist dabei als Hohlwelle ausgebildet, durch die eine Innenwelle 7 geführt ist. Mit Hilfe der Innenwelle 7 können die verdrehbaren Nocken 8 relativ zu den mit dem Wellenkörper 1 drehfest verbundenen Nocken 9 mit einer Funktionsfläche 23 verdreht werden. Über den Wellenkörper 1 sind die verdrehbaren Nocken 8 über eine Traghülse 22 gelagert. Mit Hilfe des Befestigungselementes 10, welches beispielsweise als Stift ausgebildet sein kann, sind die verdrehbaren Nocken 8 über eine Traghülse 22 drehfest mit der Innenwelle 7 verbunden, und in dem als Hohlwelle ausgebildeten Wellenkörper 1 ist ein in Umfangsrichtung verlaufendes Langloch angeordnet, welches eine relative Verdrehung der verdrehbaren Nocken 8 relativ zu den drehfest mit dem Wellenkörper 1 verbundenen Nocken 9 ermöglicht.

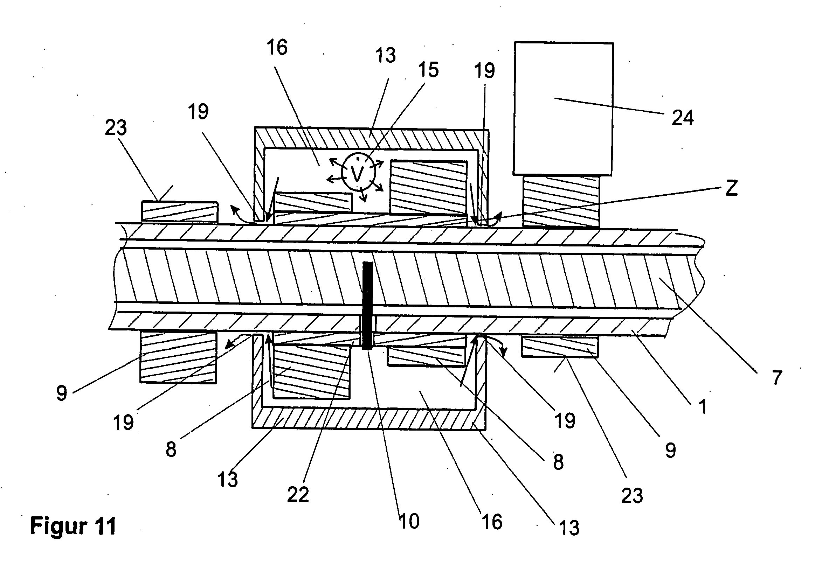

In der Fig. 11 ist eine derartige Nockenwelle in Schnittdarstellung schematisch dargestellt.

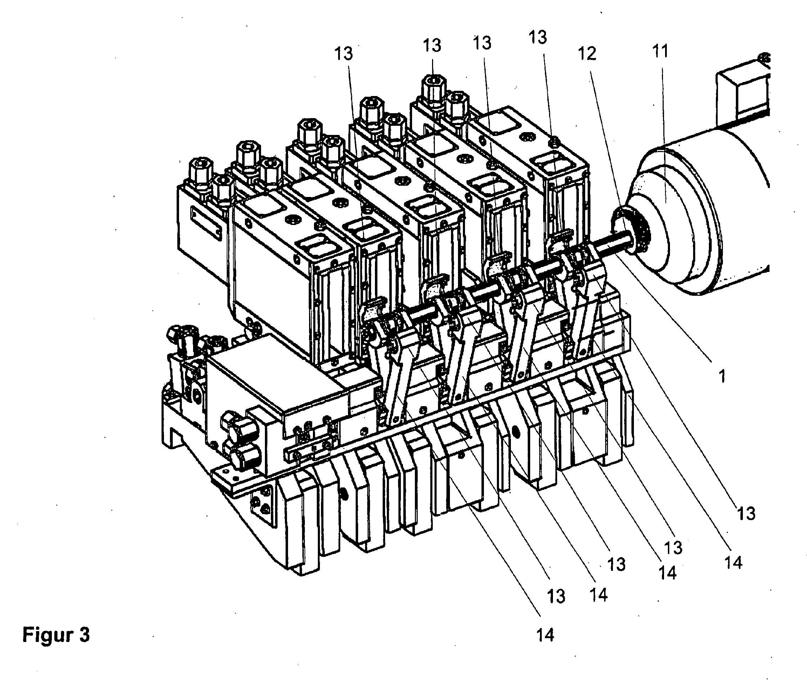

In der in Fig. 3 dargestellten Zusammenstellungszeichnung ist die erfindungsgemäße Vorrichtung in perspektivischer Ansicht dargestellt. Die Vorrichtung weist eine Antriebseinrichtung 11 auf, die eine Spanneinrichtung 12 antreibt. Mit Hilfe der Spanneinrichtung 12 ist die Welle mit dem Wellenkörper 1 eingespannt, sodass der Wellenkörper 1 mit Hilfe der Antriebseinrichtung 11 in Rotation versetzt werden kann. Weiterhin weist die in Fig. 3 dargestellte Vorrichtung Abschirmelemente 13 auf, die paarweise einander gegenüber liegend angeordnet sind. Die Abschirmelemente sind als Halbschalen ausgebildet, die in Fig. 3 in ihrer geöffneten Stellung dargestellt sind. Die Halbschalen sind dabei von Haltearmen 14 gehalten und können mit Hilfe dieser Haltearme in eine Schließstellung überführt werden.

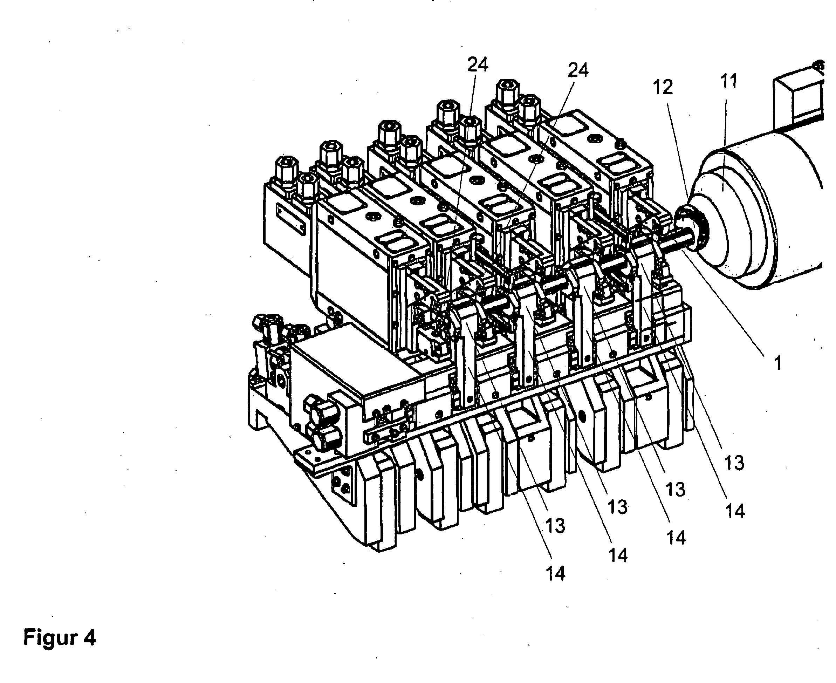

In Fig. 4 ist die Vorrichtung gemäß Fig. 3 dargestellt, wobei die Abschirmelemente 13 in ihrer Schließstellung dargestellt sind. In dieser Stellung kapseln die Abschirmelemente 14 die als Lagerelemente ausgebildeten, relativ zum Wellenkörper 1 verdrehbaren Bauteile ein. In der dargestellten Position stehen die Schleifscheiben 24 mit jeweils einer Oberfläche einer Exzenterscheibe 2 zur spanenden Bearbeitung in Eingriff.

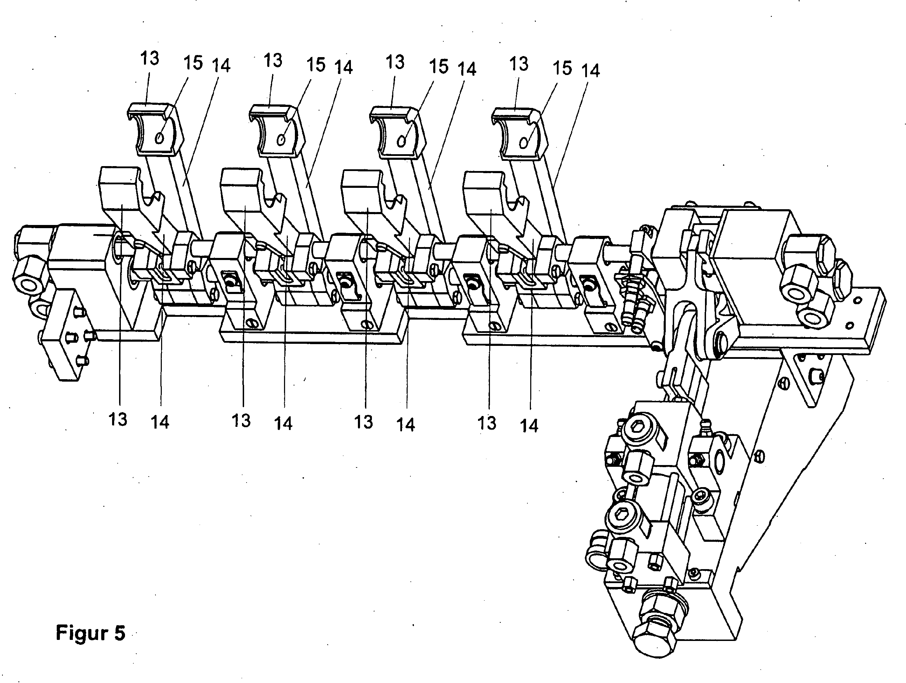

In Fig. 5 ist die erfindungsgemäße Vorrichtung in vergrößerter und vereinfachter Darstellung abgebildet. Die als halbschalenförmige Kapselelemente ausgebildeten Abschirmelemente 13 sind am freien Ende von Haltearmen 14 angeordnet und in ihrer geöffneten Stellung dargestellt. Die Haltearme 14 sind über nicht näher dargestellte Betätigungseinrichtungen um eine Lagerachse, die durch den Fußpunkt der Haltearme 14 verläuft, verschwenkbar, sodass die Abschirmelemente 13 aufeinander zubewegt werden können und in der geschlossenen Stellung eine die in Fig. 5 nicht dargestellte Welle abschnittsweise umschließende Kapsel bilden. In Fig. 5 ist zu erkennen, dass durch die Haltearme 14 Kanäle 15 verlaufen, die in die halbschalenförmigen Abschirmelemente münden. Über diese Kanäle 15 kann dem Hohlraum, der sich zwischen dem abzuschirmenden Lagerelement und dem Abschirmelement im geschlossenen Zustand ausbildet, ein unter Druck stehendes Fluid zugeführt werden, das während der spanenden Bearbeitung der Funktionsflächen der Nocken 2 bzw. 9 von innen nach außen aus dem Hohlraum 16 (vgl.

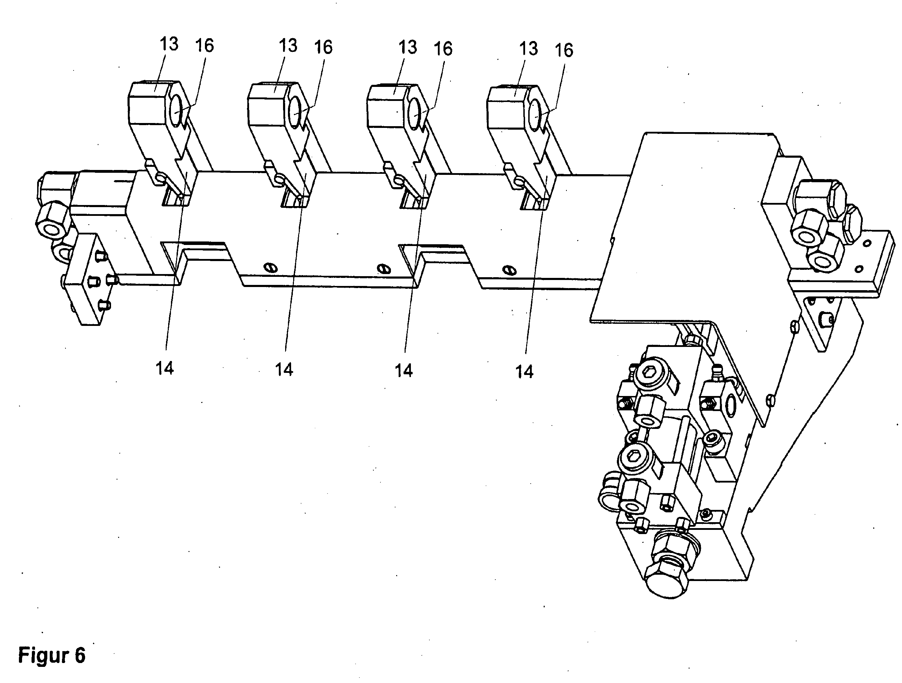

Fig. 6) strömt.

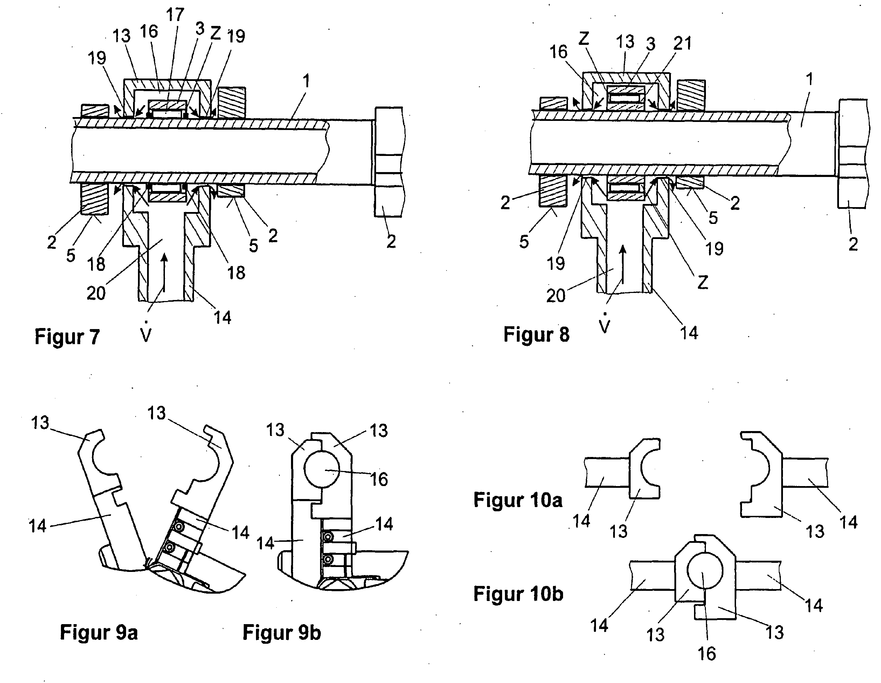

Die Schwenkbewegung der Haltearme 14 zum Öffnen und Schließen der Abschirmelemente 13 ist in den Fig. 9a und 9b veranschaulicht. Fig. 9a zeigt den geöffneten Zustand, während Fig. 9b den geschlossenen Zustand zeigt.

Alternativ ist es denkbar und möglich, die Teilstücke der Abschirmelemente 13 durch lineare Zuführung der Haltearme 14 zu öffnen bzw. zu schließen. In den Fig. 10a und 10b ist eine derartige Alternative veranschaulicht. Dabei zeigt die Fig. 10a den geöffneten und Fig. 10b den geschlossenen Zustand der Abschirmelemente 13.

In Fig. 6 ist die Vorrichtung gemäß Fig. 5 dargestellt, wobei die Abschirmelemente 13 sich in ihrer geschlossenen Position befinden. In dieser geschlossenen Position bilden die Abschirmelemente 13 einen Hohlraum 16 aus. Dieser Hohlraum 16 bildet bei in die Vorrichtung eingelegter Welle mit dieser Welle einen ringförmigen Hohlraum aus, der das abzuschirmende Lagerelement gegenüber den spanend zu bearbeitenden Nocken abschirmt bzw. abkapselt. Bereits durch diese Abkapselung wird das Eindringen von Spänen während der spanabhebenden Bearbeitung der Funktionsflächen der Nocken 2 bzw. 9 wirksam verhindert. Besonders sicher kann das Eindringen von Spänen in die Zwischenräume zwischen dem Lagerelement 3 und dem Wellenkörper 1 (vgl. z.B. Fig. 1) verhindert werden, wenn der Hohlraum 16 während der spanenden Bearbeitung von einem unter Druck stehenden Fluid, wie z.B. Luft, Öl oder Kühlflüssigkeit, von innen nach außen mit einem Volumenstrom V durchströmt wird. Mediendrücke von 6 - 26 bar haben sich dabei bewährt.

In Fig. 7 ist ein axialer Halbschnitt durch die erfindungsgemäße Vorrichtung in vergrößerter Darstellung dargestellt. In dem in Fig. 7 dargestellten Ausführungsbeispiel sind auf dem Wellenkörper 1 Nocken oder Exzenterscheiben 2 angeordnet, die verdrehfest mit dem Wellenkörper 1 verbunden sind. Die Nocken oder Exzenterscheiben 2 weisen dabei Funktionsflächen 5 auf, die im Einsatzfall mit nicht dargestellten Nockenfolgern oder Exzenterscheibenfolgern zusammenwirken. Relativ zum Wellenkörper 1 verdrehbar ist auf dem Wellenkörper 1 ein Lagerelement 3 in Gestalt einer äußeren Lagerschale angeordnet. Das Lagerelement 3 ist über Wälzkörper 17 unmittelbar auf der Oberfläche des Wellenkörpers 1 gelagert. Über Axialsicherungen 18, die z.B. als in entsprechende Ringnuten des Wellenkörpers 1 eingesetzte Sprengringe ausgebildet sein können, ist das Lagerelement 3 auf dem Wellenkörper 1 axial fixiert. Um die Funktionsflächen 5 der Nocken oder Exzenterscheiben 2 spanend bearbeiten zu können und dabei die an die Welle gestellten hohen Genauigkeitsanforderungen erfüllen zu können, ohne dabei ein Eindringen von Spänen in den Zwischenraum Z zwischen dem Lagerelement 3 und dem Wellenkörper 1 zu riskieren, ist ein als Halbschale ausgebildetes Abschirmelement 13 vorgesehen, welches das Lagerelement 3 in dem in Fig. 7 schematisch dargestellten geschlossenen Zustand umschließt und somit einkapselt. Zwischen dem Lagerelement 3 und dem Abschirmelement 13 ist dabei ein Hohlraum 16 ausgebildet und zwischen dem Abschirmelement 13 und der Oberfläche des Wellenkörpers 1 ist ein offener Ringspalt 19 vorhanden. Das Abschirmelement 13 ist auf einem Haltearm 14 angeordnet, der einen in axialer Richtung des Haltearms 14 verlaufenden Kanal 20 aufweist. Durch den Kanal 20 kann ein Volumenstrom V eines Fluids unter Druck in Richtung auf den Hohlraum 16 strömen. Dies ist in Fig. 7 durch den Pfeil angedeutet. Auf diese Weise kann der Hohlraum 16 von innen nach außen von unter Druck stehendem Fluid durchströmt werden, während die spanende Bearbeitung der Funktionsflächen 5 der Nocken oder Exzenterscheiben 2 erfolgt. Durch den von innen nach außen strömenden Volumenstrom des Fluids wird das Hindurchtreten von Spänen durch den Ringspalt 19 und damit das Eindringen von Spänen in den Zwischenraum Z wirksam verhindert. Das Fluid strömt dabei durch den Kanal 20 in den Hohlraum 16 und von dort durch den jeweiligen Ringspalt 19 in die Umgebung. Durch Pfeile ist die Aufteilung des Volumenstroms V und die Durchströmung des Fluids durch die Ringspalte 19 veranschaulicht.

Zumindest in dem Bereich, in dem die Wälzkörper 17 auf der Oberfläche des Wellenkörpers 1 abrollen, ist der Wellenkörper geschliffen, damit die Oberflächenqualität für die Lagerung des Lagerelementes 3 über die Wälzkörper ausreichend hoch ist. Alternativ kann das Lagerelement 3 auch über die Wälzkörper 17 auf einem in Fig. 8 dargestellten Lagerring 21, der mit dem Wellenkörper 1 drehfest verbunden ist, gelagert sein. Ebenso kann alternativ zu der in Fig. 7 dargestellten Ausführungsform das Lagerelement 3 als Lagerhülse ausgebildet sein, welche mit der Oberfläche des Wellenkörpers 1 eine Gleitlagerung ausbildet. In diesem Fall sind die Wälzkörper 17 nicht vorhanden.

Fig. 11 zeigt in Schnittdarstellung das Schleifen einer Nockenwelle entsprechend der Ausführungsform, wie sie in Fig. 2 dargestellt ist. Die Abschirmelemente 13 sind geschlossen, über einen Kanal 15 wird ein Fluid mit einem Volumenstrom V zugeführt, das durch die Ringspalte 19 austritt, wie es mit den Pfeilen veranschaulicht ist. Die gegenüber der Welle 1 verschwenkbaren Nocken 8 sind auf einer Traghülse 22 befestigt. Die Traghülse 22 wird über den Stift 10 mit der inneren Welle 7 drehfest verbunden. Die Traghülse 22 ist jedoch drehbar auf der Welle 1 gelagert. Die bei der Bearbeitung der Funktionsflächen 23 der Nocken 9 mit der Schleifscheibe 24 entstehenden Späne werden durch den Fluidstrom daran gehindert, in den Zwischenraum Z, hier der Gleitlagerspalt zwischen Hülse 22 und Welle 1, einzudringen.

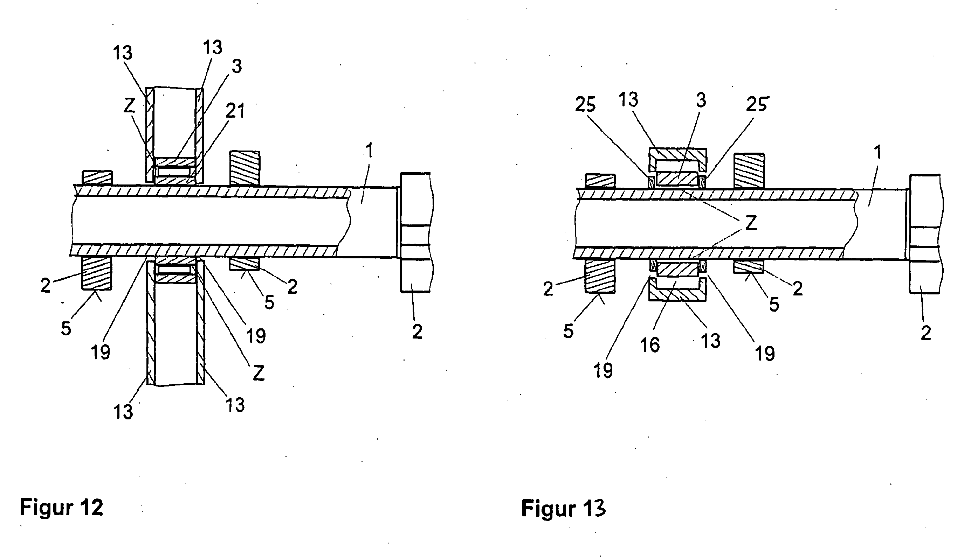

Die Fig. 12 veranschaulicht in Schnittdarstellung eine alternative Ausführungsform der Erfindung, bei der der Zwischenraum Z durch Abdeckelemente 13, so genannte Ringelemente, abgedeckt wird, ohne dass dabei das gesamte relativ zur Welle 1 verdrehbare zweite Bauteil 3 vollständig abgedeckt wird. Hier könnte beispielsweise sogar das verdrehbare zweite Bauteil 3 ebenfalls an seiner Umfangsfläche geschliffen werden. Durch ein Anpressen der Abdeckelemente 13 an die axialen Seitenflächen der verdrehbaren zweiten Bauteile 3 kann deren Verdrehung während der mechanischen Bearbeitung verhindert werden.

Die hier vorgestellte Erfindung bietet eine einfache und großserientaugliche Lösung zur mechanischen, insbesondere schleiftechnischen Bearbeitung von Wellen, die um die Wellenachse verdrehbare Funktionselemente tragen.

Es ist dabei offensichtlich, dass die in den Beispielen gezeigten Ausführungsformen untereinander kombinierbar bzw. austauschbar sind. Beispielsweise kann die in der Fig. 12 gezeigte Lösung für die Abdeckung nur der Ringspalte auch für Nockenwellen in einer Ausführungsform entsprechend Fig. 2 angewendet werden. Gleichzeitig können alle Formen von Abdeckelementen so ausgelegt sein, dass sie linear oder schwenkbar geöffnet bzw. geschlossen werden können. Auch sind Kombinationen von Arten von Abdeckelementen und/oder Techniken zum Öffnen und Schließen möglich.

Die Abdeckung von einzelnen Bauteilen auf Wellen während der mechanischen Bearbeitung kann natürlich auch für Bauteile angewendet werden, die nicht auf der Welle verdrehbar angeordnet sind. Dies kann beispielsweise für sehr empfindliche Bauteile angezeigt sein.

In Fig. 13 ist eine Ausführungsform der Erfindung dargestellt, bei der das relativ zum Wellenkörper verdrehbare Bauteil 3 über zwei drehfest mit dem Wellenkörper 1 verbundene Fixierringe 25 axial in Position gehalten wird. Das Abschirmelement 13 ist zweiteilig aufgebaut und weist zwei Halbschalen auf, welche mit den Fixierringen 25 zusammenwirken und mit diesen einen Ringspalt 19 ausbilden. Die Abschirmelemente 13 sind im Querschnitt U-förmig ausgebildet und bilden eine Abschirmung des Lagerelementes 3 derart aus, dass einerseits ein Hohlraum 16 vorhanden ist, der das Lagerelement 3 ringförmig umgibt und andererseits mit jedem Fixierring 25 ein enger Ringspalt 19 ausgebildet ist, sodass der Zwischenraum Z, der in der Fig. 13 zwischen dem Lagerelement 3 und dem Wellenkörper 1 ausgebildet ist, vor dem Eindringen von Spänen geschützt ist, die bei der spanenden Bearbeitung der Funktionsflächen 5 der Nocken 2 entstehen.

Durch diese Anordnung wird der Ringspalt 19 in einem radialen Abstand zu dem Zwischenraum Z ausgebildet, was zu einer besonders effektiven Abschirmung des Zwischenraumes Z führt. Die Fixierringe 25 bilden bei dem in Fig. 13 dargestellten Ausführungsbeispiel der Erfindung das im Patentanspruch 2 angesprochene vierte Bauteil. Der Ringspalt 19 wird nicht mit der äußeren Oberfläche des Wellenkörpers 1 ausgebildet, sondern mit der jeweiligen äußeren Mantelfläche der Fixierringe 25.

### Bezugszeichenliste

- 1: Wellenkörper
- 2: Nocken, Exzenterscheibe, erstes Bauteil
- 3: Lagerelement, zweites Bauteil
- 4: Antriebsrad
- 5: Funktionsfläche
- 6: Nockenelement
- 7: Innenwelle
- 8: Nocken, zweites Bauteil
- 9: Nocken, erstes Bauteil
- 10: Befestigungselement
- 11: Antriebseinrichtung
- 12: Spanneinrichtung
- 13: Abschirmelement, Abdeckelement
- 14: Haltearm
- 15: Kanal
- 16: Hohlraum
- 17: Wälzkörper
- 18: Axialsicherung
- 19: Ringspalt
- 20: Kanal
- 21: Lagerring, drittes Bauteil
- 22: Traghülse
- 23: Funktionsfläche
- 24: Schleifscheibe
- 25: Fixierring, viertes Bauteil
- V: Volumenstrom
- Z: Zwischenraum

## Patentansprüche

1. Verfahren zur Herstellung einer gebauten, einen Wellenkörper (1), mindestens ein drehfest mit dem Wellenkörper (1) verbundenes erstes Bauteil (2, 9) und mindestens ein relativ zum Wellenkörper (1) verdrehbares zweites Bauteil (3, 8) umfassenden Welle, bei dem das mindestens eine erste Bauteil (2, 9) und das mindestens eine zweite Bauteil.(3, 8) in der vorgesehenen Reihenfolge auf den Wellenkörper (1) aufgeschoben und montiert werden, **dadurch gekennzeichnet, dass** zumindest das drehfest mit dem Wellenkörper (1) verbundene erste Bauteil (2, 9) einer spanabhebenden Bearbeitung unterzogen und das mindestens eine zweite Bauteil (3, 8) während dieser Bearbeitung gegenüber dem mindestens einen ersten Bauteil (2, 9) derart abgeschirmt wird, dass bei der Bearbeitung des ersten Bauteils (2, 9) entstehende Späne nicht in den zwischen dem zweiten Bauteil (3, 8) und dem Wellenkörper (1) oder zwischen dem zweiten Bauteil (3, 8) und einem drehfest mit dem Wellenkörper (1) verbundenen dritten Bauteil (21) vorhandenen Zwischenraum (Z) eindringen.

2. Verfahren nach Anspruch 1, **dadurch gekennzeichnet, dass** ein oder mehrere Zwischenräume (Z) zwischen dem zweiten Bauteil (3, 8) und dem Wellenkörper (1) oder dem mit dem Wellenkörper (1) verbundenen dritten Bauteil (21) während der spanabhebenden Bearbeitung von einer Abdeckung (13) derart verdeckt wird bzw. werden, dass zwischen der Abdeckung (13) und dem Wellenkörper (1) oder einem mit dem Wellenkörper (1) drehfest verbundenen vierten Bauteil (25) ein Ringspalt (19) vorhanden ist.

3. Verfahren nach Anspruch 1 oder 2, **dadurch gekennzeichnet, dass** das zweite Bauteil (3, 8) während der spanabhebenden Bearbeitung von einer Kapsel derart umschlossen wird, dass zwischen dem zweiten Bauteil (3, 8) und der Kapsel ein Hohlraum (16) und zwischen der Kapsel und dem Wellenkörper (1) ein Ringspalt (19) vorhanden ist.

4. Verfahren nach Anspruch 3, **dadurch gekennzeichnet, dass** der Hohlraum (16) während der spanabhebenden Bearbeitung des ersten Bauteils (2, 9) von innen nach außen von einem Fluid durchströmt wird.

5. Verfahren nach Anspruch 4 oder 5, **dadurch gekennzeichnet, dass** das Fluid zur Kühlung des ersten Bauteils (2, 9) während der spanabhebenden Bearbeitung genutzt wird.

6. Verfahren nach Anspruch 3 oder 4, **dadurch gekennzeichnet, dass** als Fluid Luft, Öl oder eine Kühlflüssigkeit verwendet wird.

7. Vorrichtung zur spanabhebenden Bearbeitung eines ersten Bauteils einer gebauten, einen Wellenkörper (1), mindestens ein drehfest mit dem Wellenkörper (1) verbundenes erstes Bauteil (2, 9) und mindestens ein relativ zum Wellenkörper (1) drehbares zweites Bauteil (3, 8) umfassenden Welle mit einer Spanneinrichtung zum Spannen der fertig zusammengebauten Welle und einer Antriebseinrichtung, mit der die gespannte Welle in Rotation versetzbar ist, **dadurch gekennzeichnet, dass** mindestens zweiteilig ausgebildete Abschirmelemente (13) vorgesehen sind, die aus einer Öffnungsstellung in eine Schließstellung bringbar sind, in welcher sie den zwischen dem zweiten Bauteil (3, 8) und dem Wellenkörper (1) oder zwischen dem zweiten Bauteil (3, 8) und einem drehfest mit dem Wellenkörper (1) verbundenen dritten Bauteil (21) vorhandenen Zwischenraum (Z) gegenüber dem ersten Bauteil (2, 9) während der spanabhebenden Bearbeitung derart abschirmen, dass in den Zwischenraum (Z) keine bei der spanenden Bearbeitung anfallenden Späne eindringen können.

8. Vorrichtung nach Anspruch 7, **dadurch gekennzeichnet, dass** die Abschirmelemente (13) als Halbringe geformte Abdeckscheiben umfassen, die von Haltearmen (14) gehalten und über diese Haltearme (14) im Bereich des zwischen dem zweiten Bauteil (3, 8) und dem Wellenkörper (1) oder dem zweiten Bauteil (3, 8) und einem drehfest mit dem Wellenkörper (1) verbundenen dritten Bauteil (21) vorhandenen Zwischenraums gegen das zweite Bauteil (3, 8) pressbar sind.

9. Vorrichtung nach Anspruch 7, **dadurch gekennzeichnet, dass** die Abschirmelemente (13) Halbschalen umfassen, die von Haltearmen (14) gehalten werden und die in der Schließstellung eine Kapsel bilden, durch die das relativ zum Wellenkörper (1) verdrehbare zweite Bauteil (3, 8) während der spanabhebenden Bearbeitung derart umschließbar ist, dass zwischen dem zweiten Bauteil (3, 8) und der Kapsel ein Hohlraum (16) und zwischen den Halbschalen und dem Wellenkörper (1) ein Ringspalt (19) vorhanden ist.

10. Vorrichtung nach Anspruch 9, **dadurch gekennzeichnet, dass** durch mindestens einen von zwei einander zugeordneten Haltearmen (14) ein Kanal verläuft, durch den ein Fluid mit Druck in den Hohlraum (16) einleitbar ist.

11. Vorrichtung nach den Ansprüchen 7 bis 10, **dadurch gekennzeichnet, dass** das relativ zum Wellenkörper (1) verdrehbare zweite Bauteil (3, 8) ein Lagerelement (3) ist, über das die Welle im Einsatz drehbar lagerbar ist.

12. Vorrichtung nach Anspruch 11, **dadurch gekennzeichnet, dass** das Lagerelement (3) über Wälzkörper (17) direkt auf der Oberfläche des Wellenkörpers (1) gelagert ist.

13. Vorrichtung nach den Ansprüchen 7 bis 12, **dadurch gekennzeichnet, dass** das Lagerelement (3) über Wälzkörper (17) auf einem mit dem Wellenkörper (1) drehfest verbundenen dritten Bauteil (21) in Gestalt eines Lagerringes gelagert ist.

14. Vorrichtung nach den Ansprüchen 7 bis 12, **dadurch gekennzeichnet, dass** das Lagerelement (3) eine Lagerhülse ist, die mit der Oberfläche des Wellenkörpers (1) oder einem drehfest mit dem Wellenkörper (1) verbundenen dritten Bauteil (21) ein Gleitlager ausbildet.

## Claims

1. Method of producing a composite shaft comprising a shaft body (1), at least one first component (2, 9) non-rotatably connected to the shaft body (1), and at least one second component (3, 8) rotatable relative to the shaft body (1), in which method the at least one first component (2, 9) and the at least one second component (3, 8) are pushed onto the shaft body (1) and assembled in the intended sequence, **characterised in that** at least the first component (2, 9) non-rotatably connected to the shaft body (1) is subjected to a chip-removing machining process and that the at least one second component (3, 8) is screened from the at least one first component (2, 9) during this machining process in such a way that chips produced during the machining of the first component (2, 9) do not penetrate into the intermediate space (Z) between the second component (3, 8) and the shaft body (1) or between the second component (3, 8) and a third component (21) non-rotatably connected to the shaft body (1).

2. Method as claimed in claim 1, **characterised in that** one or several intermediate spaces (Z) between the second component (3, 8) and the shaft body (1) or the third component (21) connected to the shaft body (1) is/are covered by a cover (13) during the chip-removing machining process in such a way that an annular gap (19) is provided between the cover (13) and the shaft body (1) or a fourth component (25) non-rotatably connected to the shaft body (1).

3. Method as claimed in claim 1 or 2 **characterised in that** the second component (3, 8) is surrounded during the chip-removing machining process by a capsule in such a way that a cavity (16) is provided between the second component (3, 8) and the capsule and an annular gap (19) is provided between the capsule and the shaft body (1).

4. Method as claimed in claim 3, **characterised in that** the cavity (16) has a fluid flowing through it from the inside to the outside during the chip-removing machining process of the first component (2, 9).

5. Method as claimed in claim 4 or 5, **characterised in that** the fluid for cooling the first component (2, 9) is used during the chip-removing machining process.

6. Method as claimed in claim 3 or 4, **characterised in that** the fluid used is air, oil or a cooling liquid.

7. Device for chip-removing machining of a first component of a composite shaft which comprises a shaft body (1), at least one first component (2, 9) non-rotatably connected to the shaft body (1) and at least one second component (3, 8) which is able to rotate relative to the shaft body (1), having a clamping device for clamping the fully assembled shaft and a drive device with which the clamped shaft can be made to rotate, **characterised in that** shielding elements (13) formed in at least two pieces are provided which can be brought from an open position into a closed position in which they shield the intermediate space (Z), which is provided between the second component (3, 8) and the shaft body (1) or between the second component (3, 8) and a third component (21) non-rotatably connected to the shaft body (1), with respect to the first component (2, 9) during the chip-removing machining process in such a way that no chips resulting from the chip-removing machining process can enter the intermediate space (Z).

8. Device as claimed in claim 7, **characterised in that** the shielding elements (13) comprise covering discs which are formed as half rings and which are held by holding arms (14) and can be pressed by these holding arms (14) against the second component (3, 8) in the region of the intermediate space which is provided between the second component (3, 8) and the shaft body (1) or the second component (3, 8) and a third component (21) non-rotatably connected to the shaft body (1).

9. Device as claimed in claim 7, **characterised in that** the shielding elements (13) comprise half shells which are held by holding arms (14) and which in the closed position form a capsule, by means of which the second component (3, 8), which can rotate relative to the shaft body (1), can be enclosed during the chip-removing machining process in such a way that a cavity (16) is provided between the second component (3, 8) and the capsule and an annular gap (19) is provided between the half shells and the shaft body (1).

10. Device as claimed in claim 9, **characterised in that** a duct extends through at least one of two mutually allocated holding arms (14), through which a fluid can be introduced under pressure into the cavity (16).

11. Device as claimed in claims 7 to 10, **characterised in that** the second component (3, 8) which can rotate relative to the shaft body (1) is a bearing element (3) by means of which the shaft can be rotatably mounted when in use.

12. Device as claimed in claim 11, **characterised in that** the bearing element (3) is mounted via roller bodies (17) directly on the surface of the shaft body (1).

13. Device as claimed in claims 7 to 12, **characterised in that** the bearing element (3) is mounted in the form of a bearing ring via roller bodies (17) on a third component (21) which is non-rotatably connected to the shaft body (1).

14. Device as claimed in claims 7 to 12, **characterised in that** the bearing element (3) is a bearing sleeve which forms a slide bearing with the surface of the shaft body (1) or a third component (21) non-rotatably connected to the shaft body (1).

## Revendications

1. Procédé pour la fabrication d'un arbre monté, qui comprend un corps d'arbre (1), au moins un premier composant (2, 9), qui est relié en rotation au corps d'arbre (1), et au moins un deuxième composant (3, 8) pouvant tourner par rapport au corps d'arbre (1), dans lequel le premier composant (2, 9) au moins prévu et le deuxième composant (3, 8) au moins prévu sont glissés et montés sur le corps d'arbre (1), dans l'ordre prévu, **caractérisé en ce qu'**au moins le premier composant (2, 9), solidaire en rotation avec le corps d'arbre (1), est soumis à un usinage par enlèvement de copeaux, et qu'au moins un deuxième composant (3, 8) est protégé pendant ce traitement par rapport au premier composant (2, 9) au moins prévu, de sorte que les copeaux, produits au cours de l'usinage du premier composant (2, 9) ne puissent pas pénétrer dans les intervalles (Z) présents entre le deuxième composant (3, 8) et le corps d'arbre (1) ou entre le deuxième composant (3, 8) et un troisième composant (21) relié solidaire en rotation au corps d'arbre (1).

2. Procédé selon la revendication 1, **caractérisé en ce qu'**un ou plusieurs intervalles (Z), présent/s entre le deuxième composant (3, 8) et le corps d'arbre (1) ou le troisième composant (21), relié au corps d'arbre (1), est / sont recouvert/s pendant l'usinage par enlèvement de copeaux par une pièce de recouvrement (13) de sorte qu'un interstice annulaire (19) existe entre la pièce de recouvrement (13) et le corps d'arbre (1) ou un quatrième composant (25), relié solidaire en rotation au corps d'arbre (1).

3. Procédé selon revendication 1 ou 2, **caractérisé en ce que** le deuxième composant (3, 8) est enfermé, pendant l'usinage par enlèvement de copeaux, dans une capsule, de sorte qu'il existe un espace creux (16) entre le deuxième composant (3, 8) et la capsule, et un interstice annulaire (19) entre la capsule et le corps d'arbre (1).

4. Procédé selon la revendication 3, **caractérisé en ce que** l'espace vide (16) est traversé, de l'intérieur vers l'extérieur, par un fluide, pendant l'usinage par enlèvement de copeaux du premier composant (2, 9).

5. Procédé selon revendication 3 ou 4, **caractérisé en ce que** le fluide est utilisé pour le refroidissement du premier composant (2, 9) au cours de l'usinage par enlèvement de copeaux.

6. Procédé selon revendication 3 ou 4, **caractérisé en ce que** l'on utilise comme fluide de l'air, de l'huile ou un liquide.

7. Dispositif pour l'usinage par enlèvement de copeaux d'un premier composant d'un arbre monté, qui comprend un corps d'arbre (1), au moins un premier composant (2, 9) relié en rotation au corps d'arbre (1) et au moins un deuxième composant (3, 8) pouvant tourner par rapport au corps d'arbre (1), avec un dispositif de serrage pour serrer l'arbre monté, et un système d'entraînement, avec lequel l'arbre serré peut être mis en rotation, **caractérisé en ce que** sont prévus des éléments de protection (13), composés d'au moins de deux pièces, qui peuvent être amenés d'une position d'ouverture à une position de fermeture, dans laquelle, pendant l'usinage par enlèvement de copeaux, ils protègent, par rapport au premier composant (2, 9), l'intervalle (Z) existant entre le deuxième composant (3, 8) et le corps d'arbre (1) ou entre le deuxième composant (3, 8) et un troisième composant (21), relié solidaire en rotation au corps d'arbre (1), de sorte qu'aucuns copeaux, produits pendant l'usinage par enlèvement de copeaux, ne puissent y pénétrer.

8. Dispositif selon la revendication 7, **caractérisé en ce que** les éléments de protection (13) comprennent, des plaques de recouvrement en forme de demi-bagues, qui sont tenus par des bras de support (14) et qui peuvent être pressées contre le deuxième composant (3, 8), par l'intermédiaire de ces bras de support (14) dans la région de l'intervalle présent entre le deuxième composant (3, 8) et le corps d'arbre (1) ou entre le deuxième composant (3, 8) et un troisième composant (21) relié solidaire en rotation au corps d'arbre (1).

9. Dispositif selon la revendication 7, **caractérisé en ce que** les éléments de protection (13) comprennent des demi-coquilles, qui sont tenues par des bras de support (14) et qui, dans la position de fermeture, forment une capsule, par laquelle le deuxième composant (3, 8), pouvant être tourné par rapport au corps d'arbre (1), peut être entouré, pendant l'usinage avec enlèvement de copeaux, de sorte qu'il existe un espace vide (16) entre le deuxième composant (3, 8) et la capsule, et un interstice annulaire (19) entre les demi-coquilles et le corps d'arbre (1).

10. Dispositif selon la revendication 9, **caractérisé en ce qu'**à travers au moins l'un de deux bras de support (14), associés l'un à l'autre, s'étend un canal, par lequel un fluide peut être introduit sous pression dans l'espace vide (16).

11. Dispositif selon les revendications 7 à 10, **caractérisé en ce que** le deuxième composant (3, 8), pouvant être tourné par rapport au corps d'arbre (1), est un élément de montage (3), par l'intermédiaire duquel l'arbre peut être monté à rotation.

12. Dispositif selon la revendication 11, **caractérisé en ce que** l'élément de montage (3) est installé directement sur la surface du corps d'arbre (1) par l'intermédiaire d'éléments roulants (17).

13. Dispositif selon les revendications 7 à 12, **caractérisé en ce que** l'élément de montage (3) est installé sur un troisième composant (21) relié solidaire en rotation au corps d'arbre (1), sous la forme d'une bague de roulement.

14. Dispositif selon les revendications 7 a 12, **caractérisé en ce que** l'élément de montage (3) est une chemise de palier, qui, avec la surface du corps d'arbre (1) ou un troisième composant (21), relié solidaire en rotation au corps d'arbre (1), forme un palier à glissement.
